# EUROPEAN PATENT APPLICATION

(11) **EP 3 907 313 A1**
(43) Date of publication of application: **10.11.2021**
(21) Application number: 21159293.6
(22) Date of filing: 25.02.2021
(51) Int. Cl.: D02G 3/48, B60C 9/08, B60C 9/12, B60C 9/04

(54) **TIRE COMPRISING ARAMID CORD IN CARCASS**

(30) Priority: 04.05.2020 KR 20200053352
(71) Applicant: HANKOOK TIRE & TECHNOLOGY CO., LTD, Gyeonggi-do 13494 (KR)
(72) Inventor: Cho, Hyun Ran, 34111 Daejeon (KR)
(74) Representative: Petraz, Gilberto Luigi

(57) **Abstract**

The present invention relates to a tire including an aramid cord in the carcass layer, the tire including a carcass layer including a multi-filament aramid cord. The tire of the present invention can maintain the performance of existing performance of tires for trucks and buses by ameliorating weak fatigue resistance while enhancing the fuel efficiency through weight reduction of the carcass cord.

## Description

### BACKGROUND OF THE INVENTION

### 1. Field of the Invention

The present invention relates to a tire including aramid cords in the carcass layer, and more particularly, to a tire that can maintain the existing performance of tires for trucks and buses by improving weak fatigue resistance while enhancing the fuel efficiency through weight reduction of the carcass cord.

### 2. Description of the Related Art

Carcass cord is a material playing a role similar to bones in a tire and is an important reinforcement material that supports the load transferred to the tire and maintains the shape of the tire.

Important characteristics required from the carcass cord include strength, adhesive force, modulus, and fatigue resistance, and generally, the strength, adhesive force, and fatigue resistance are correlated to the durability of a tire, while the modulus is correlated to the driving characteristics and riding comfort of the tire. Particularly, strength is an important factor for calculating the safety of the tire, and in the case of using a cord having low strength, several layers of carcasses are used to maintain safety of the tire, while in contrast, in the case of using a cord having high strength, the use amount of the carcass is reduced to make it possible to reduce the weight of the tire.

As such, reducing the use amount of the carcass by using high-strength cords is a preferable factor in terms of enhancing the fuel efficiency of the car, and the thickness of the tire is reduced by reducing the use amount so that heat generated inside the tire during driving is easily dissipated. Therefore, it can be said that reducing the use amount of the carcass is also preferable in view of enhancing the durability of the tire.

There have been attempts to apply aramid cords as a raw material for such carcass cord of the tire; however, there is a problem that aramid cord has weak fatigue resistance (compression) as compared to other general thermoplastic fibers.

### SUMMARY OF THE INVENTION

An object of the present invention is to provide a tire that can maintain the existing performance of tires for trucks and buses by improving weak fatigue resistance while enhancing the fuel efficiency through weight reduction of the carcass cord.

A tire according to an aspect of the present invention includes a carcass layer including a multi-filament aramid cord, wherein the aramid cord includes a 2000-denier to 6000-denier cable formed of plies twisted at a twist multiplier of 100 tpm (turns per meter) to 800 tpm, and each ply is formed of filaments including poly(paraphenylene terephthalamide) twisted at a twist multiplier of 90 tpm to 790 tpm and is a 1000-denier to 3000-denier ply.

At this time, the aramid cord may have a breaking strength of 10 g/d or more, a breaking elongation of 2% or more, a median elongation (2.25 g/d) of 3% or less, and an initial modulus change rate of 8% or less.

The carcass layer may include a rolled material including the above-described aramid cord and a rolled topping rubber at a position selected from above, below, or above and below the aramid cord.

Here, the thickness of the topping rubber may be 0.2 mm to 0.6 mm.

Furthermore, the topping rubber may include natural rubber (NR).

On the other hand, the aramid cord may be disposed such that the angle formed by the length direction of the cable and the circumferential direction of the tire is 80° to 100°.

The tire may be a tire for a truck or a bus.

The tire according to the present invention can maintain the performance of existing tires for trucks or buses by improving weak fatigue resistance while enhancing the fuel efficiency through weight reduction of the carcass cord.

### BRIEF DESCRIPTION OF THE DRAWINGS

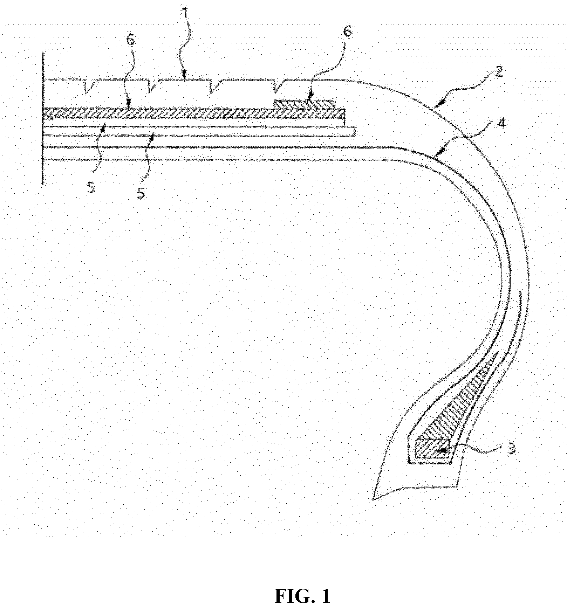

FIG. 1 is a schematic cross-sectional view of a radial tire obtainable by applying aramid cords to the carcass layer according to embodiments of the present invention.

### DETAILED DESCRIPTION OF THE PREFERRED EMBODIMENTS

Hereinafter, the present invention will be described in more detail.

A tire according to an embodiment of the present invention includes a multifilament aramid cord in the carcass layer.

FIG. 1 is a schematic cross-sectional view of a radial tire obtainable by applying multifilament aramid cords to the carcass layer according to an embodiment of the present invention. The tire will be described below with reference to FIG. 1.

According to FIG. 1, the tire includes a tread part (1), sidewall parts (2), and bead parts (3). A carcass layer (4) is provided between a pair of bead parts (3) that are disposed on the right-hand side and the left-hand side, and the two edges in the tire width direction of the carcass layer (4) are respectively extended upward winding around the circumference of each of the bead parts (3) from the inner side to the outer side of the tire. On the outer side of the carcass layer (4), a steel belt layer (5) and a belt layer (6) are provided, while an inner liner (not shown in the diagram) is disposed on the inner side of the carcass layer (4).

The carcass layer (4) includes multifilament aramid cord.

That is, with regard to the tire according to the present invention, the fuel efficiency can be enhanced through weight reduction of the tire, by applying aramid cord as a body ply reinforcement agent in replacement of existing steel cord rolling materials (rubber compound with steel cord). In fact, aramid cord has a defect of having weak fatigue resistance (compression) as compared to other general thermoplastic fibers; however, in the present invention, the defect of aramid cord has been ameliorated by increasing the twist multiplier of the aramid cord.

Specifically, fatigue resistance is enhanced by increasing the twist multiplier of the aramid cord that may be vulnerable to compression at the turn-up portion of the carcass on the outer side of the tire. In the case of aramid filament 1500D/2, when the twist multiplier is increased by 200 tpm, the degree of fatigue resistance can be increased by 60% or higher. Thereby, the aramid cord can have excellent tensile strain and initial modulus retention as well as excellent resistance to fatigue.

Accordingly, the aramid cord can be produced by twisting a multi-filament yarn including poly(paraphenylene terephthalamide) at a twist multiplier of 100 tpm (turns per meter) to 800 tpm to form a 1000-denier to 3000-denier ply, and finally twisting the ply at a twist multiplier of 100 tpm to 800 tpm to form a 2000-denier to 6000-denier cable.

Here, the twist multiplier tpm and the denier value can be measured under standard conditions (20°C, 65%RH).

Thus, the aramid cord my have a breaking strength of 10 g/d or more, a breaking elongation of 2% or more, a median elongation (2.25 g/d) of 3% or less, and an initial modulus change rate of 8% or less. Specifically, the aramid cord may have a breaking strength of 10.0 g/d to 20.0 g/d, a breaking elongation of 3% to 9%, a median elongation (2.25 g/d) of 0% to 2%, and an initial modulus change rate of 0% to 5%. Here, the breaking strength, breaking elongation, median elongation, and initial modulus change rate can be measured by general measurement methods under standard conditions (20°C, 65%RH) using an Instron tester or the like.

When the breaking strength of the aramid cord is less than 10 g/d, the breaking elongation is less than 2%, the median elongation (2.25 g/d) is more than 3%, or the initial modulus change rate is more than 8%, a problem of having deteriorated durability of the tire may occur.

Meanwhile, the carcass layer (4) may include a rolled material including an aramid cord and a rolled topping rubber at a position selected from above, below, or above and below the aramid cord.

At this time, the thickness of the topping rubber may be 0.2 mm to 0.6 mm. In a case in which the thickness of the topping rubber is less than 0.2 mm, there may occur a problem in the durability of the tire, and in a case in which the thickness is more than 0.6 mm, a decrease in the fuel efficiency may occur due to an increase in the weight of the tire.

Furthermore, the topping rubber may be an All NR base compound comprising 80% or more by weight of natural rubber (NR), specifically 100% by weight of natural rubber, with respect to the total weight of the raw material rubber. In the case of applying All NR base compound as the topping rubber, the composition of the topping rubber becomes similar to that of the rubber sites positioned above and below the carcass layer (4), where natural rubber is used as a main raw material, and it is preferable from the viewpoint that the carcass layer (4) can be positioned stably in a well-balanced manner inside the tire.

The aramid cord may be disposed such that the angle formed by the length direction of the cable and the circumferential direction of the tire is 80° to 100°, and preferably, the aramid cord can be applied as carcass for a tire for a truck or a bus (truck/bus radial (TBR)). In this case, by preventing deterioration of physical properties during high-speed driving, driving performance equivalent or superior to that in the case of applying existing steel cord rolled materials can be obtained, and also, weight reduction by about 10% can be achieved on the basis of the case of applying aramid filament 1500D/2 to a small-sized TBR 215/75R17.5, so that the fuel efficiency can be enhanced.

Hereinafter, Examples of the present invention will be described in detail so that those ordinarily skilled in the art to which the present invention is pertained can easily carry out the invention. However, the present invention can be realized in various different forms and is not intended to be limited to the Examples described herein.

### [Experimental Example 1: Physical properties of aramid cord]

Using aramid filaments 1500D/2, plies were formed by changing the twist multiplier as shown in the following Table 1, and cables were produced by changing the twist multiplier as shown in the following Table 1.

For the aramid cords thus produced, the breaking strength, breaking elongation, median elongation, and fatigue resistance were measured, and the measurement values of Comparative Example 1 and other Examples were converted to index values on the basis of the breaking strength, median elongation, breaking elongation, and fatigue resistance of Example 2. The results are presented in Table 1.

**[Table 1]**

| | Example 1 | Example 2 | Example 3 | Example 4 | Comparative Example 1 |
|---|---|---|---|---|---|
| Standard | Aramid 1500D/2 | | | | |
| Twist multiplier of ply (tpm) | 100 | 300 | 500 | 800 | 90 |
| Twist multiplier of cable (tpm) | 90 | 290 | 490 | 790 | 80 |
| Breaking strength | 120 | 100 | 80 | 70 | 122 |
| Median elongation | 40 | 100 | 160 | 200 | 10 |
| Breaking elongation | 70 | 100 | 130 | 150 | 20 |
| Fatigue resistance | 10 | 100 | 300 | 500 | 5 |

- The breaking strength, breaking elongation, and median elongation were measured under standard conditions (20°C, 65%RH) using an Instron tester.
- The fatigue resistance (unit: %) was measured by a Belt Fatigue method, that is, by applying fatigue to a cord and evaluating the degree of decrease in strength compared to the original strength.

According to Table 1, it can be seen that as the twist multiplier of the aramid cord was increased by 200 tpm, the breaking strength decreased by 20%, the median elongation (at 2.0 g/d) increased by 60%, and the breaking elongation increased by 30%, and the fatigue resistance increased by 200%.

### [Experimental Example 2: Physical properties of tire]

The aramid cords produced in Experimental Example 1 were applied to small-sized TBR 215/75R17.5, and then the physical properties of the tires were measured. The measurement values of Comparative Example 1 and Examples were converted to index values on the basis of the belt high-speed durability, bead high-speed durability, and tire weight of Comparative Example 2. The results are presented in Table 2.

**[Table 2]**

| | Comparative Example 2 | Comparative Example 1 | Example 2 | Example 3 |
|---|---|---|---|---|
| Standard | Steel cord | Aramid 1500D/2 | | |
| Twist multiplier of ply (tpm) | - | 90 | 300 | 500 |
| Twist multiplier of cable (tpm) | - | 80 | 290 | 490 |
| Belt high-speed durability | 100 | 50 | 100 | 110 |
| Bead high-speed durability | 100 | 50 | 100 | 110 |
| Tire weight | 100 | 90 | 90 | 90 |

- Belt high-speed durability: measured by a load increasing (Load 80% to 120%) method under a high-speed driving condition of 80 km/h
- Bead high-speed durability; measured by a high-load (Load 150%) method under a high-speed driving condition of 60 km/h

According to Table 2, it can be seen that when aramid 1500D/2 rolled materials were applied to small-sized TBR 215/75R17.5, weight reduction by about 10% could be achieved, and driving performance equal or superior to the original driving performance could be obtained.

Preferred embodiments of the present invention have been described above in detail; however, the scope of rights of the present invention is not limited to these, and various modifications and improvements made by an ordinarily skilled person using the basic concept of the present invention as defined in the following claims also belong to the scope of rights of the present invention.

### Reference Signs List

1: Tread part
2: Sidewall part
3: Bead part
4: Carcass layer
5: Steel belt layer
6: Belt layer

## Claims

1. A tire comprising a carcass layer including a multi-filament aramid cord,
wherein the aramid cord includes a 2000-denier to 6000-denier cable formed of plies twisted at a twist multiplier of 100 tpm (turns per meter) to 800 tpm, and
each ply is formed of filaments including poly(paraphenylene terephthalamide) twisted at a twist multiplier of 90 tpm to 790 tpm and is a 1000-denier to 3000-denier ply.

2. The tire according to claim 1, wherein the aramid cord has a breaking strength of 10 g/d or more, a breaking elongation of 2% or more, a median elongation (2.25 g/d) of 3% or less, and an initial modulus change rate of 8% or less.

3. The tire according to claim 1, wherein the carcass layer includes a rolled material including the aramid cord and a rolled topping rubber at a position selected from above, below, or both above and below the aramid cord.

4. The tire according to claim 3, wherein a thickness of the topping rubber is 0.2 mm to 0.6 mm.

5. The tire according to claim 3, wherein the topping rubber includes natural rubber (NR).

6. The tire according to claim 1, wherein the aramid cord is disposed such that the angle formed by the length direction of the cable and the circumferential direction of the tire is 80° to 100°.

7. The tire according to claim 1, wherein the tire is a tire for a truck or a bus.
